Europäisches Patentamt

European Patent Office

Office européen des brevets

(11) Publication number: **0 146 318**
**B1**

(12) EUROPEAN PATENT SPECIFICATION

(45) Date of publication of patent specification: 25.01.89

(51) Int. Cl.⁴: **B 60 J 5/04**

(21) Application number: 84308511.9

(22) Date of filing: 06.12.84

(54) Vehicle door structure.

(30) Priority: 19.12.83 JP 195292/83
26.12.83 JP 203538/83
27.02.84 JP 27643/84

(43) Date of publication of application:
26.06.85 Bulletin 85/26

(45) Publication of the grant of the patent:
25.01.89 Bulletin 89/04

(84) Designated Contracting States:
DE FR GB

(56) References cited:
EP-A-0 040 588
DE-A-2 808 235 .

(73) Proprietor: TOYOTA JIDOSHA KABUSHIKI
KAISHA
1, Toyota-cho Toyota-shi
Aichi-ken 471 (JP)

(72) Inventor: Ikuta, Hiroshige
9-1, Maruyama-cho
Toyota-shi Aichi-ken. (JP)
Inventor: Okamoto, Yuji
Higashi Apart. Room No. 312 10, Toyota-cho
Toyota-shi Aichi-ken (JP)

(74) Representative: Ben-Nathan, Laurence Albert
et al
Urquhart-Dykes & Lord 91 Wimpole Street
London W1M 8AH (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates generally to a vehicle door structure, and more particularly to a vehicle door structure having an exterior surface portion of a door window located in a vehicle door, such that it is almost flush with an exterior surface portion of an enclosing door frame. Further, the present invention provides an apparatus which secures more reliably a door window to a resilient member, the resilient member being attached by an adhesive to the door window.

The vehicle door structure of the present invention reduces undesirable air resistance and noise which are generated by wind passing across the exterior surface portions of the window and door frame. Further, this door structure eliminates the narrow field of view which is present in known devices. This vehicle door structure also improves the aesthetic appearance of the door assembly and provides for a more reliable attachment between the door window and a resilient member attached to the door window.

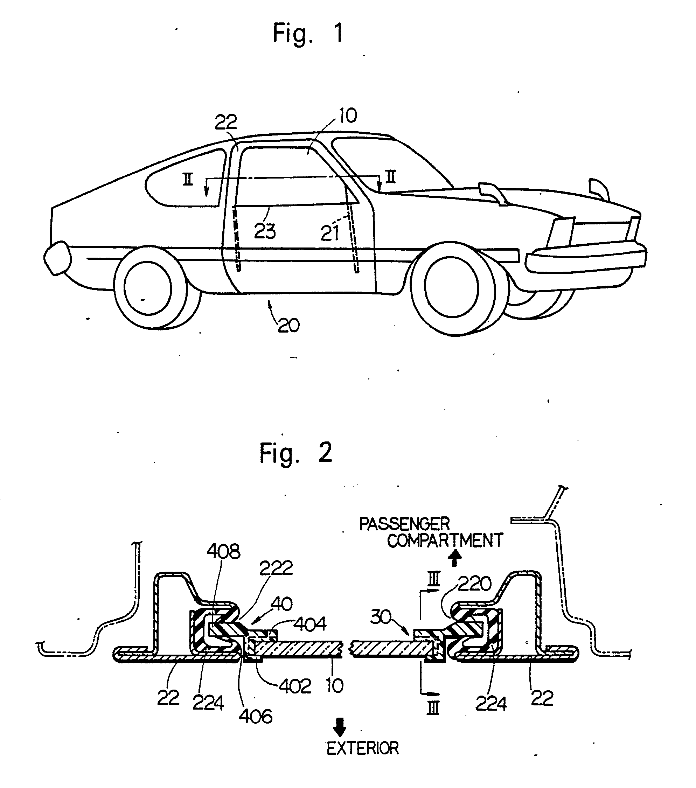

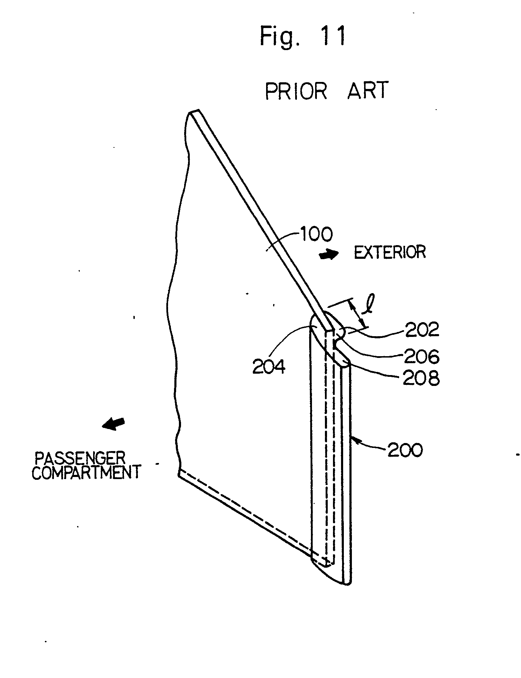

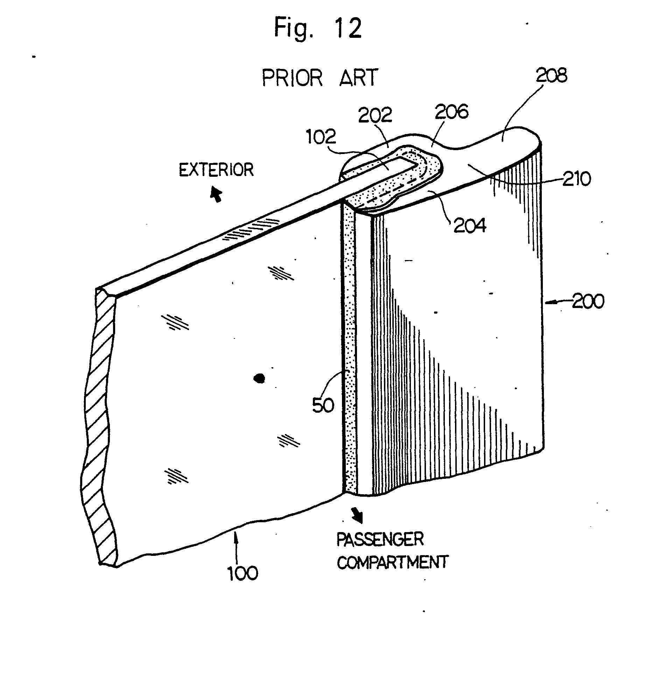

An example of a known door structure is disclosed in Japanese Laid-Open Utility Model Sho JP—U—158322 81 (Japanese Utility Model Application No. Sho 55-58647) which is shown in Figure 12 of the present application. According to this known structure, a rear end portion 102 of a door window 100 is fixed to a slider 200 which guides the door window 100 during the vertical movement thereof. An adhesive 50 is provided between the rear end portion 102 of the door window 100 and the slider 200 to fix the door window 100 to the slider 200. Figure 12 shows that an upper surface 210 of the slider 200 is horizontally sectioned. The slider 200 comprises an exterior portion 202, an interior portion 204, a connecting portion 206, and an end portion 208. The exterior portion 202 of the slider 200 extends in an almost parallel relationship with the exterior surface of the door window 100, and further is almost flush with the exterior surface of the door frame. The interior portion 204 of the slider 200 extends in an almost parallel relationship with the interior surface of the door window 100. The connecting portion 206 of the slider 200 extends laterally across the vehicle and connects the interior portion 204 with the exterior portion 202. The end portion 208 is formed from a continuation of the interior portion 204 such that it extends away from the door window 100. figure 11 of the present application shows that the slider 200 is fixed to the edge of the door window 100, such that it can be vertically displaced along a guide groove defined within a lower window frame 21, as shown in Figure 1. The horizontal length "l" of the portions 202 and 204 is limited in size because when "l" is large, the field of view of an occupant in the vehicle is reduced and the aesthetic appearance of the vehicle is reduced. However, whenever "l" is reduced to be as small as possible, the rigidity in the area where the portions 202 and 204 of the slider 200 grasp the door window 100 is reduced. This results in the door window 100 being unstable in the area where the window glass 100 is fixed to the slider 200.

Further, Figure 12 shows that the upper surface 210 of the slider 200 is cut away in the horizontal direction. When the end portion 208 of the slider 200 slides within the guide groove 221 of the door frame, the vertical sliding movement is met with a partial resistance due to frictional forces between the slider 200 and the guide groove 221. These frictional forces cause a shearing force to be exerted upon the adhesive filled between the door window 100 and the slider 200. Hence, the adhering force of the adhesive must be sufficient to sustain the resultant shearing force, or the slider 200 might be separated from the door window 100. This separation is very undesirable.

The present invention was made in view of the foregoing background and to overcome the foregoing drawbacks. It is accordingly an object of this invention to provide a vehicle door structure which firmly secures a door window to a resilient slider portion.

The invention provides a vehicle door structure, comprising a door frame swingably mounted to a vehicle such that it opens and closes for a passenger's ingress or egress, a door window provided in the door frame such that the exterior surface of the door window is substantially flush with the exterior surface of the door frame, and a slider having a longitudinal groove therein to receive a side edge portion of the door window which is secured therein by an adhesive introduced into the groove, the slider acting to guide the door window along the door frame during an upward and downward displacement thereof, characterized in that a lower portion of the slider projects laterally over an edge portion of the door window to a greater extent than the upper portion of the slider, such that there is a greater surface area of contact for equivalent vertical lengths of the slider between the door window and the lower portion of the slider than between the door window and the upper portion of the slider.

The lower portion of the slider therefore covers more of the interior and/or exterior surfaces of the window than the upper portion of the slider, thereby providing for more surface area contact between the window and the slider. Additionally, the slider can have extended grooved portions which permit ends of the door window to be located therein. Ends of the door window may fit into the space defined within the extended slider groove, with vertical top and bottom portions of the groove being closed such that corners of the window are held therein. Furthermore, the slider can have a plurality of ribs separately provided at different vertical positions in a groove of the slider. These alternative or conjunctive structures cause the shearing forces resulting from vertical displacement of the window to be distributed to a larger surface contact area between the window and the slider, resulting in a more reliable assembly.

The above objects, features and advantages of the present invention will become more apparent from the following description of the preferred embodiments taken in conjunction with the accompanying drawings, wherein:

Fig. 1 is a perspective view of a vehicle body in which a vehicle door structure according to the present invention is applied;

Fig. 2 is an enlarged cross-sectional view taken along the line II—II in Fig. 1;

Fig. 3 is a partially enlarged cross-sectional view taken along the line III—III in Fig. 2;

Fig. 4 is a cross-sectional view taken along the line IV—IV in Fig. 3;

Fig. 5 is a cross-sectional view taken along the line V—V in Fig. 3;

Fig. 6 is a partial perspective view of a vehicle door structure according to an embodiment of the present invention;

Fig. 7 is a partial perspective view of a vehicle door structure according to another embodiment of the present invention;

Fig. 8 is an enlarged perspective view of a portion of Fig. 7 indexed by the arrow VIII;

Fig. 9 is an enlarged perspective view of a portion of Fig. 7 indexed by the arrow IX;

Fig. 10 is a perspective view of a vehicle door structure corresponding to Fig. 9, according to another embodiment;

Fig. 11 is a partial perspective view of a known vehicle door structure; and

Fig. 12 is a partial perspective view of a known vehicle door structure.

The present invention is described in detail with reference to the accompanying drawings which illustrate different embodiments of the present invention.

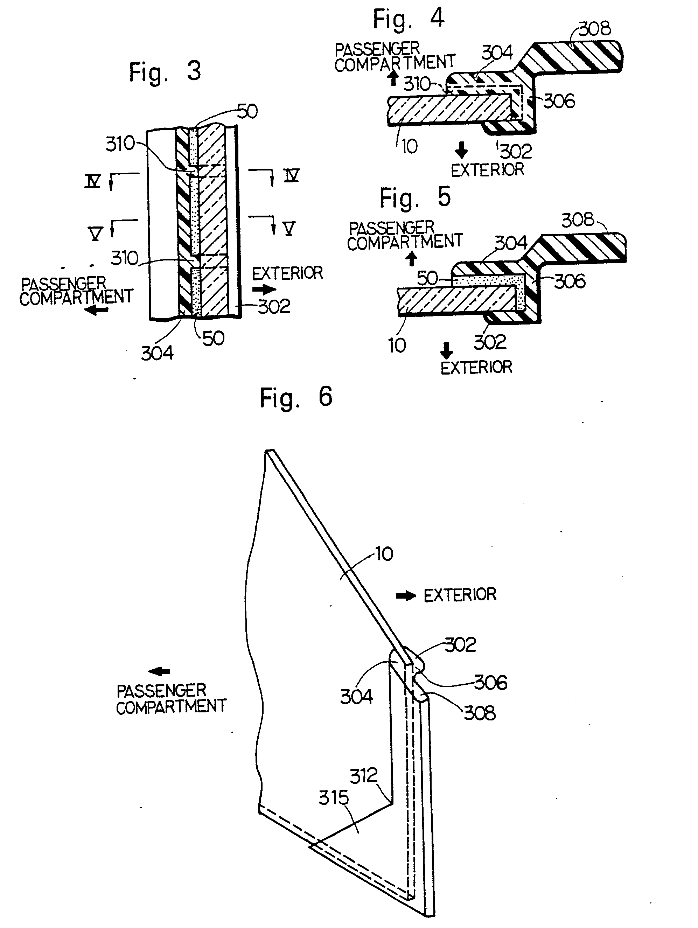

Fig. 1 shows a perspective view of a vehicle body which utilizes a structure according to the present invention. A door window 10 is mounted such that it can be upwardly and downwardly displaced by a passenger's operation of a window crank (not shown in drawings) located within a door frame 22 of a door 20. Fig. 2 shows an enlarged cross-sectional view taken along the line II—II in Fig. 1. As shown in Fig. 2, the door window 10 is mounted within the door frame 22. The door frame 22 has door window guide grooves 220 and 222 at front and rear portions on the frame 22, respectively. A cushioning member 224 is provided within each of the grooves 220 and 222. The door window 10 is fixed to sliders 30 and 40 at front and rear end portions thereof. Figs. 4 and 5 show that the slider 30, which is made of synthetic resin, comprises an exterior portion 302, an interior portion 304, a connecting portion 306, and a front end portion 308. The exterior portion 302 of the front slider 30 extends in an almost parallel relationship with the exterior surface of the door window 10, and is almost flush with the exterior surface of the door frame 22. The interior portion 304 of the front slider 30 extends in an almost parallel relationship with the interior surface of the door window 10. The connecting portion 306 of the slider 30 extends laterally across the vehicle and connects the interior portion 304 with the exterior portion 302. The interior portion 304 of the slider 30 forwardly extends in the vehicle to form the front end portion 308. The forward end of the front end portion 308 fits into the groove 220 and is surrounded by the cushioning member 224.

Similarly, a rear slider 40, which is made of synthetic resin, comprises an exterior portion 402, an interior portion 404, a connecting portion 406, and a rear portion 408. The exterior portion 402 of the rear slider 40 extends in an almost parallel relationship with the exterior surface of the door window 10, and is almost flush with the exterior surface of the door frame 22. The interior portion 404 of the rear slider 40 extends in an almost parallel relationship with the interior surface of the door window 10. The connecting portion 406 of the rear slider 40 extends laterally across the vehicle and connects the interior portion 404 with the exterior portion 402. The interior portion 404 of the slider 40 rearwardly extends in the vehicle to form the rear end portion 408. The rearward end of the rear portion 408 fits into the groove 222 and is surrounded by the cushioning member 224.

The portions 304 and 306 of the front slider 30 have ribs 310 which partially surround the front portion of the door window 10. As shown in Fig. 3, a plurality of ribs 310 are separately provided at different vertical positions such that they properly locate the door window 10 within the slider 30. the front end of the door window 10 is fitted into the space defined between the portions 302, 304 and 306 of the front slider 30. An adhesive 50, such as a silicon adhesive or urethane adhesive, is fitted into the space defined between the door window 10 and the ribs 310, as shown in Fig. 5. The adhesive 50 fixes the front end of the door window 10 to the front slider 30. The rear end of the door window 10 is also fixed onto the rear slider 40 in a similar manner.

Fig. 6 shows a partial perspective view of a vehicle door structure according to an embodiment of the present invention. The portions 302 and 304 of the slider 30 extend to form enlarged portions 315 at lower portions thereof. The enlarged portions 315 are designed to be inclined in the rearward direction. The point 312 where the portion 304 begins to be inclined, is located such that it is underneath a belt line 23 of the door 20, identified in Fig. 1, when the door window 10 is completely closed. The enlarged portion 315 enhance the rigidity between the door window 10 and the slider 30. According to the embodiment shown in Fig. 6, the enlarged portions 315 are triangular in shape. However, the enlarged portions 315 may be square or round or any other appropriate shape. Further, according to the embodiment shown in Fig. 6, both portions 302 and 304 extend to form enlarged portions 315 at lower portions thereof. However, at least only one of the portions 302 and 304 must extend to form an enlarged portion at a lower portion thereof.

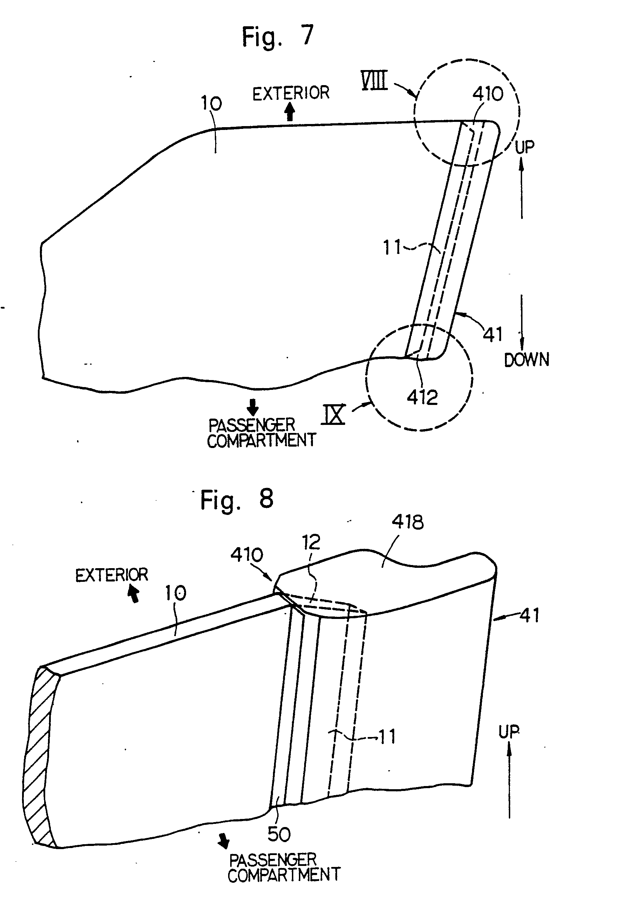

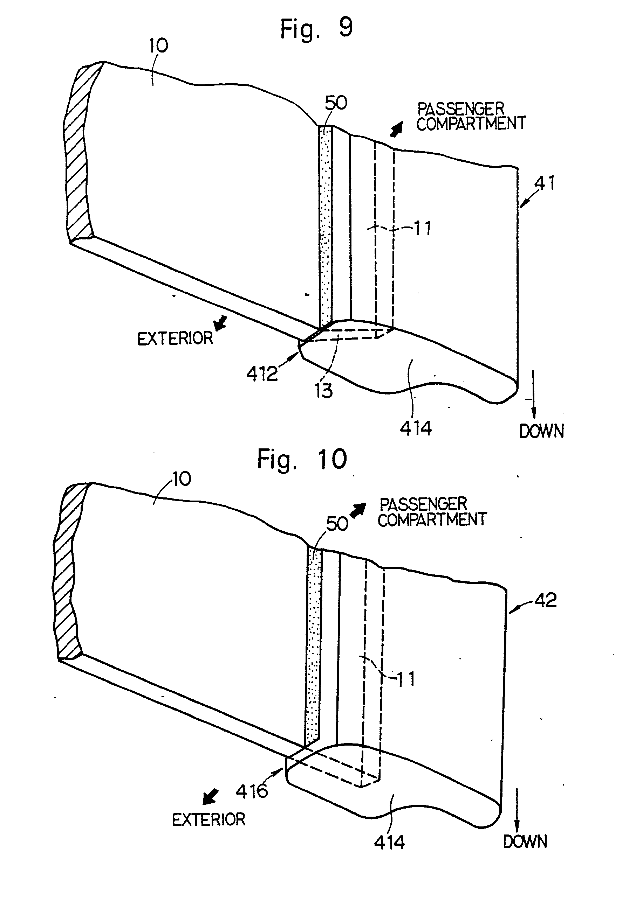

Fig. 7 shows a partial perspective view of a vehicle door structure according to another embodiment of the present invention. The encircled portions of the vehicle door structure indexed by arrows VIII and IX in Fig. 7, are shown in Figs. 8 and 9, respectively, in an enlarged scale.

A detailed discussion of the embodiment shown in Fig. 8 occurs in our related European Patent Application 84308512.7 published under EP—A—0146319 entitled "Vehicle Door Structure". This related patent application was filed in the European Patent Office on the same day that this patent application was filed and is co-pending herewith. Fig. 8 shows that the door window 10 is secured by an adhesive 50 onto a slider 41. The rear vertical end portion 11 of the door window 10 is fitted into a groove defined within the slider 41. The adhesive 50 is provided between the rear vertical end portion 11 of the door window 10 and the slider 41. The slider 41 has stoppers 410 and 412 at its top and bottom portions, respectively, such that the rear corner portions 12 and 13 of the door window 10 engage therewith. The slider 41 has a flat surface 418 at its upper portion, which integrally extends toward the door window 10 to protrude on the groove of the slider 41 and forms the stopper 410. The rear upper corner portion 12 of the door window 10 fits into the groove of the slider 41, which is covered with the stopper 410 at its upper portion thereof.

Similarly, the slider 41 has a flat surface 414 at its lower portion, which integrally extends toward the door window 10 to protrude on the groove of the slider 41 and forms the stopper 412. The rear lower corner portion 13 of the door window 10 fits into the groove in the slider 41, which is covered with the stopper 412 at its lower portion thereof.

Fig. 10 shows a perspective view of a vehicle door structure according to another embodiment of the present invention, wherein a lower stopper is slightly modified. The difference between the embodiment shown in Fig. 9 and the embodiment shown in Fig. 10 is that a lower surface 414 of a slider 42 is located in a lower horizontal plane than the lower surface 414 shown in Fig. 9. The surface 414 in Fig. 10 is horizontally lower because the door window 10 does not have an inclined rear lower corner. The surface 414 of the slider 42 extends in a downward direction, resulting in the stopper 416 having an increased thickness.

According to the embodiments shown in Figs. 7—10, the rear corner portions 12 and 13 of the door window 10 engage with the stoppers 410, 412 and 416, respectively. Therefore, whenever external forces result from friction between the slider and the groove in the door frame, some of the external forces are transmitted to the stoppers 410, 412 and 416. Hence, even if the adhesive force of the adhesive filled between the door window and the slider is not sufficient to sustain the shearing force, the slider does not separate away from the door window because of this novel design.

Any of the preferred embodiments which have been discussed can be utilized in a door frame structure, individually or collectively, to improve the door frame. More specifically, the ribs 310 shown in Fig. 3 may be combined with the enlarged portion 312, shown in Fig. 6, and this combination can be further combined with the embodiments shown in Figs. 7—10.

## Claims

1. A vehicle door structure, comprising a door frame (22) swingably mounted to a vehicle such that it opens and closes for a passenger's ingress or egress, a door window (10) provided in the door frame (22) such that the exterior surface of the door window (10) is substantially flush with the exterior surface of the door frame (22), and a slider (30, 40) having a longitudinal groove therein to receive a side edge portion of the door window (10) which is secured therein by an adhesive introduced into the groove, the slider (30, 40) acting to guide the door window (10) along the door frame (22) during an upward and downward displacement thereof, characterized in that a lower portion of the slider (30, 40) projects laterally over an edge portion of the door window (10) to a greater extent than the upper portion of the slider (30, 40), such that there is a greater surface area of contact for equivalent vertical lengths of the slider (30, 40) between the door window (10) and the lower portion of the slider (30, 40) than between the door window (10) and the upper portion of the slider (30, 40).

2. A vehicle door structure as claimed in Claim 1, characterized in that the slider (30, 40) further comprises a first portion (302, 402) which extends in an almost parallel relationship with the exterior surface of the door window (10), a second portion (304, 404) which extends in an almost parallel relationship with an interior surface of the door window (10), a third portion (306, 406) which connects the first portion (302, 402) of the slider (30, 40) with the second portion (304, 404) of the slider (30, 40), and a fourth portion (308, 408) connected with the third portion (306, 406), such that the fourth portion (308, 408) extends in a direction which is substantially opposite to the second portion (304, 404) and one of the portions selected from the group of portions consisting of the first portion (302, 402) and the second portion (304, 404) has a lower portion which extends laterally further than the upper portion, as aforesaid.

3. A vehicle door structure as claimed in Claim 2, characterized in that each of the lower portions of the first portion (302, 402) and the second portion (304, 404) extends laterally further than the upper portion, as aforesaid.

4. A vehicle door structure as claimed in Claim 2 or Claim 3, characterized in that the lower portion is larger than the upper portion by being inclined rearwardly from a point (312) which is located under a belt line (23) of the vehicle door (20) when the door window (10) is in a fully closed position.

5. A vehicle door structure as claimed in any of Claims 1—4 wherein the slider (30, 40) has a plurality of ribs (310) which extend toward the door window (10) and contact therewith when the end of the door window (10) is positioned within said groove in the slider (30, 40), such that the plurality of ribs (310) partition the groove (220, 222) in the slider (30, 40) into a plurality of spaces created between adjacent ribs (310), the slider (30, 40) and the door window (10), whereby the ribs (310) absorb at least a portion of stresses existing between an interface between the slider (30, 40) and the door window and wherein the door window (10) has inclined corner portions (12, 13), which are complementary with inclined corner portions of said groove in the slider (30, 40).

6. A vehicle door structure as claimed in any of Claims 1—5, wherein the upper and lower end surfaces (418, 414) of the slider (30, 40) close to the upper and lower ends of said groove in the slider (30, 40) act as caps which maintain the door window (10) between the upper and lower surfaces (418, 414) and within said groove in the slider (30, 40).

7. A vehicle door structure as claimed in any of Claims 1—4 wherein at least the lower end surface (414) of the slider (30, 40) is located in a different horizontal plane to that containing the adjacent horizontal end surface of the door window (10), to provide a portion closing the respective end of said groove in the slider (30, 40) to act as a cap which locates said edge portion of the door window within said groove in the slider (30, 40).

**Patentansprüche**

1. Fahrzeugtürkonstruktion, umfassend einen Türrahmen (22), der in schwenkbarer Ausführung so an einem Fahrzeug montiert ist, daß er sich beim Ein- oder Ausstieg eines Fahrgastes öffnen und schließen läßt, ein Türfenster (10), das so im Türrahmen (22) angeordnet ist, daß die Außenfläche des Türfensters (10) im wesentlichen bündig mit der Außenfläche des Türrahmens (22) anschließt, und ein Schieberelement (30, 40) mit einer darin ausgebildeten Längsnut zur Aufnahme eines Seitenkantenabschnitts des Türfensters (10), das darin von einem in die Nut eingegebenen Haftmittel gehalten wird, wobei das Schieberelement (30, 40) dazu dient, das Türfenster (10) während seiner Aufwärts- oder Abwärtsbewegung am Türrahmen (22) entlang zu führen, dadurch gekennzeichnet, daß ein unterer Abschnitt des Schieberelements (30, 40) seitlich über einen Kantenabschnitt des Türfensters (10) in größerem Umfang als der obere Abschnitt des Schieberelements (30, 40) hinausragt, so daß eine größere Kontaktoberfläche für gleiche vertikale Längen des Schieberelements (30, 40) zwischen dem Türfenster (10) und dem unteren Abschnitt des Schieberelements (30, 40) als zwischen dem Türfenster (10) und dem oberen Abschnitt des Schieberelements (30, 40) entsteht.

2. Fahrzeugtürkonstruktion gemäß Anspruch 1, dadurch gekennzeichnet, daß das Schieberelement (30, 40) weiterhin einen ersten Abschnitt (302, 402), der nahezu parallel zur Außenfläche des Türfensters (10) verläuft, einen zweiten Abschnitt (304, 404), der nahezu parallel zu einer Innenfläche des Türfensters (10) verläuft, einen dritten Abschnitt (306, 406), der den ersten Abschnitt (302, 402) des Schieberelements (30, 40) mit dem zweiten Abschnitt (304, 404) des Schieberelements (30, 40) verbindet, und einen vierten Abschnitt (308, 408) umfaßt, der so mit dem dritten Abschnitt (306, 406) verbunden ist, daß der vierte Abschnitt (308, 408) in einer Richtung verläuft, die im wesentlichen gegenläufig zum zweiten Abschnitt (304, 404) ausgerichtet ist, und wobei einer der Abschnitte, der der Gruppe von Abschnitten, die aus dem ersten Abschnitt (304, 402) und dem zweiten Abschnitt (304, 404) besteht, entstammt, einen unteren Abschnitt aufweist, der sich, wie bereits ausgeführt, seitlich weiter als der obere Abschnitt erstreckt.

3. Fahrzeugtürkonstruktion gemäß Anspruch 2, dadurch gekennzeichnet, daß sich, wie bereits ausgeführt, jeder der unteren Abschnitte des ersten Abschnitts (302, 402) und des zweiten Abschnitts (304, 404) seitlich weiter als der obere Abschnitt erstreckt.

4. Fahrzeugtürkonstruktion gemäß Anspruch 2 oder Anspruch 3, dadurch gekennzeichnet, daß der untere Abschnitt dadurch größer als der obere Abschnitt ist, daß er eine nach hinten ausgerichtete Neigung von einem Punkt (312) aus aufweist, der unterhalb einer Gürtellinie (23) der Fahrzeugtür (20) liegt, wenn sich das Türfenster (10) in einer vollständig geschlossenen Position befindet.

5. Fahrzeugtürkonstruktion gemäß irgendeinem der Ansprüche 1 bis 4, wobei das Schieberelement (30, 40) eine Vielzahl von Rippen (310) aufweist, die sich in Richtung auf das Türfenster (10) erstrecken und damit in Berührung kommen, wenn sich das Ende des Türfensters (10) innerhalb der genannten Nut im Schieberelement (30, 40) befindet, so daß die Vielzahl von Rippen (310) die Nut (220, 222) im Schieberelement (30, 40) in eine Vielzahl von Räumen aufteilt, die zwischen angrenzenden Rippen (310), dem Schieberelement (30, 40) und dem Türfenster (10) entstehen, wobei die Rippen (310) zumindest einen Teil der Spannungen aufnehmen, die in einer Grenzfläche zwischen dem Schieberelement (30, 40) und dem Türfenster entstehen, und wobei das Türfenster (10) geneigte Eckenabschnitte (12, 13) aufweist, die passend zu geneigten Eckenabschnitten der genannten Nut im Schieberelement (30, 40) ausgeführt sind.

6. Fahrzeugtürkonstruktion gemäß irgendeinem der Ansprüche 1 bis 5, wobei die oberen und unteren Endflächen (418, 414) des Schieberelements (30, 40) in der Nähe der oberen und unteren Enden der genannten Nut im Schieberelement (30, 40) als Kappen dienen, die das Türfenster (10) zwischen den oberen und unteren Flächen (418, 414) und innerhalb der genannten Nut im Schieberelement (30, 40) halten.

7. Fahrzeugtürkonstruktion gemäß irgendeinem der Ansprüche 1 bis 4, wobei zumindest die untere Endfläche (414) des Schieberelements (30, 40) in einer anderen horizontalen Ebene als diejenige angeordnet ist, die die angrenzende horizontale Endfläche des Türfensters (10) enthält, so daß dadurch ein Abschnitt entsteht, der das entsprechende Ende der genannten Nut im Schieberelement (30, 40) abschließt, um so als Kappe zu dienen, die den genannten Kantenabschnitt des Türfensters innerhalb der genannten Nut im Schieberelement (30, 40) hält.

**Revendications**

1. Structure de portière de voiture, comprenant un cadre (22) de portière monté sur un véhicule de façon à pivoter dans les deux sens pour pouvoir s'ouvrir et se fermer en vue de l'entrée et de la sortie d'un passager, une glace (10) de portière équipant le cadre (22) de façon telle que la surface extérieure de la glace (10) de portière affleure sensiblement la surface extérieure du cadre (22), et un coulisseau (30, 40) comportant une gorge longitudinale destinées à recevoir une partie marginale latérale de la glace (10) de portière, qui y est fixé par un adhésif introduit dans la gorge, le coulisseau (30, 40) servant un guidage de la glace (10) de portière le long du cadre (22) de portière pendant son déplacement vers le haut et vers le bas, caractérisée en ce que la partie inférieure du coulisseau (30, 40) fait saillie latéralement au dessus d'une partie d'angle de la glace (10) de portière sur une distance plus grande que la partie supérieure du coulisseau (30, 40), de manière à définir une plus grande surface de contact pour des longueurs verticales équivalentes du coulisseau (30, 40), entre la glace (10) de portière et la partie inférieure du coulisseau (30, 40) qu'entre ladite grace (10) et la partie supérieure du coulisseau (30, 40).

2. Structure de portière de véhicule selon la revendication 1, caractérisée en ce que le coulisseau (30, 40) comprend en outre une première partie (302, 402) qui s'étend presque parallèlement à la surface extérieur de la glace (10) de portière, une seconde partie (304, 404) qui s'étend presque parallèlement à la surface intérieure du cadre (10) de portière, une troisièe partie (306, 406) qui relie la première partie (302, 402) du coulisseau (30, 40) à la seconde partie (304, 404) du coulisseau (30, 40), et une quatrième partie (308, 408) reliée à la troisième partie (306, 406), de façon telle que la quatrième partie (308, 408) s'étende dans une direction qui est sensiblement opposée à la seconde partie (304, 404), cependant qu'une des parties choisie dans le groupe formé par la première partie (302, 402) et la seconde partie (304, 404) comporte une partie inférieure qui s'étend latéralement plus loin que la partie supérieure précitée.

3. Structure de portière de véhicule selon la revendication 2, caractérisée en ce que chacune des parties inférieures de la première partie (302, 402) et de la seconde partie (304, 404) s'étend latéralement plus loin que la partie supérieure, précitée.

4. Structure de portière de véhicule selon la revendication 2 ou la revendication 3, caractérisée en ce que la partie inférieure est plus grande que la partie supérieure du fait qu'elle est inclinée vers l'arrière à partir d'un point (312) situé sous une ligne de ceinture (23) de la portière de véhicule (20) lorsque celle-ci est en position de fermeture complète.

5. Structure de portière de véhicule selon l'une quelconque des revendications 1 à 4, dans laquelle le coulisseau (30, 40) comporte une pluralité de nervures (310) qui s'étendent en direction de la glace (10) de portière et sont en contact avec celle-ci lorsque l'extrémité de la glace (10) de portière est positionnée à l'intérieur de ladite gorge du coulisseau (30, 40), de façon telle que la pluralité de nervures (310) compartiment la gorge (220, 222) du coulisseau (30, 40) en une pluralité d'espaces créés entre des nervures voisines (310), le coulisseau (30, 40) et la glace (10) de portière, les nervures (310) absorbant ainsi au moins une partie des contraintes existant dans l'interface entre le coulisseau (30, 40) et la glace de portière, cependant que la glace (10) de portière présente des parties d'angles inclinées (12, 13) qui sont complémentaires des parties d'angles inclinées de ladite gorge du coulisseau (30, 40).

6. Structure de portière de véhicule selon l'une quelconque des revendications 1 à 5, dans laquelle les surfaces supérieures et inférieures (418, 414) du coulisseau (30, 40) situées à proximité immédiate des extrémités supérieure et inférieure de ladite gorge du coulisseau (30, 40) font fonction de chapes qui maintiennent la glace (10) de portière entre les surfaces supérieure et inférieure (418, 414) et à l'intérieur de ladite gorge du coulisseau (30, 40).

7. Structure de portière de véhicule selon l'une quelconque des revendications 1 à 4, dans laquelle au moins la surface inférieure (414) du coulisseau (30, 40) est située dans un plan horizontal différent de celui qui contient la surface horizontal voisine de la glace (10) de portière, pour fournir une partie qui ferme l'extrémité correspondante de ladite gorge du coulisseau (30, 40) afin de faire fonction de chape qui positionne ladite partie de bord de la glace de portière à l'intérieur de ladite gorge du coulisseau (30, 40).

Fig. 1

Fig. 2

PASSENGER
COMPARTMENT

EXTERIOR

EP 0 146 318 B1

Fig. 3

Fig. 4

Fig. 5

Fig. 6

2

# Fig. 7

# Fig. 8

## Fig. 9

PASSENGER COMPARTMENT

EXTERIOR

DOWN

## Fig. 10

PASSENGER COMPARTMENT

EXTERIOR

DOWN

# Fig. 11

## PRIOR ART

# Fig.  12

PRIOR  ART